# EUROPEAN PATENT APPLICATION

(11) **EP 4 813 791 A1**
(43) Date of publication of application: **30.09.2026**
(21) Application number: 26167706.6
(22) Date of filing: 25.03.2026
(51) Int. Cl.: B60W 60/00

(54) **ASSESSING DRIVING BEHAVIOR FOR AUTONOMOUS VEHICLES**

(30) Priority: 27.03.2025 US 202519092578
(71) Applicant: Waymo LLC, Mountain View, CA 94043 (US)
(72) Inventor: JOHNSON, Leif Morgan, Mountain View, CA 94043 (US); ENGSTROM, Johan, Mountain View, CA 94043 (US)
(74) Representative: Chettle, John Edward

(57) **Abstract**

Methods, systems, and apparatus, including computer programs encoded on a computer storage medium, for assessing driving behavior of an ego agent. In one aspect, a method comprises receiving data representing a state of a driving environment of the ego agent; computing a first plurality of reachable sets for one or more other road users in the driving environment using a normal set of movement parameters; computing a second plurality of reachable sets for the one or more other road users in the driving environment using an expanded set of movement parameters; computing a first drivable area for the ego agent based on the first plurality of reachable sets; computing a second drivable area for the ego agent based on the second plurality of reachable sets; and computing one or more driving metrics based on the first drivable area and the second drivable area computed for the ego agent.

## Description

### BACKGROUND

This specification relates to autonomous vehicles and techniques for performing assessments for the actions of various agents.

Autonomous vehicles can include autonomously driven cars (including buses, trucks, etc.), boats, and aircraft. Autonomous vehicles use a variety of on-board sensors and computer systems to detect nearby objects and use such detections to make control and navigation decisions.

Fully autonomous driving by an autonomously driven vehicle (ADV), sometimes referred to as a self-driving car, has been a difficult and complex technical problem to solve. Part of the complexity stems from the fact that simply knowing current traffic laws, reliably detecting other vehicles and pedestrians, and being able to control the vehicle to high degrees of precision are still often not enough to achieve fully autonomous driving. For example, other vehicles and pedestrians, and road conditions, may move or change quickly or unexpectedly.

### SUMMARY

This specification describes how a system can assess the driving behavior of an agent under two sets of movement parameters. In this specification, an agent can be any appropriate entity in a driving environment capable of moving independently. Thus, an agent can be an autonomously driven vehicle or semi-autonomously driven vehicle (ADV) in the real world or in a simulation. An agent can also be another road user, including cars, cyclists, pedestrians, and animals, to name just a few examples. In this specification, an ego agent is an agent from whose perspective the driving metrics will be computed. An ego agent is often an ADV, but need not be. The techniques described in this specification can be used in both offline and online scenarios, e.g., planning and driving decisions online, as well as for offline analysis of simulated or previously recorded agent behaviors; or both.

In this specification, the two sets of movement parameters under which the driving behavior of the agent is assessed can be a normal set of movement parameters and an expanded set of movement parameters. The expanded set of movement parameters can include actions that have expanded kinematic limits relative to the actions in the normal set of movement parameters. The normal set of movement parameters can correspond to situations in which road users in the driving environment act in a way that an ego agent has anticipated by virtue of incorporating their expected behaviors into a current action plan. In contrast, the expanded set of movement parameters define behaviors of road users that are unexpected, which the ego agent has therefore not incorporated into a current action plan.

An on-board system of an agent can gather sensor data corresponding to a surrounding driving environment. The system can use this data to compute reachable sets and corresponding occupied areas for the ego agent as well as for other road users in the environment. The reachable sets can be kinematic states that can be attained by the agent at a given future time. The occupied areas can correspond to areas on the ground plane of anticipated future occupancy by the ego agent or the other road users. The occupied areas can be obtained by mapping kinematic states included in reachable sets to sets of spatial coordinates for those states.

The system can compute drivable areas for the ego agent by determining areas on the ground plane where the occupied areas of the ego agent do not overlap with occupied areas of any other road users. In this way, the drivable areas computed by the system represent areas on the ground plane, determined based on reachable sets, which are both kinematically possible for the ego agent to occupy in the future and free from overlap with the anticipated occupancy of other road users. Drivable areas can thus represent areas where it is expected to be safe for the ego agent to drive. The system can compute a first drivable area corresponding to a normal set of movement parameters and a second drivable area corresponding to an expanded set of movement parameters.

The system can compute driving metrics for the ego agent based on the pair of computed drivable areas. The driving metrics can include one or more of whether the ego agent experiences a normal operation frame violation at a given time, or whether the ego agent experiences an unexpected event frame violation at a given time. Normal operation frame violations and unexpected event frame violations are situations in which a first and second drivable area, respectively, does not exist for the ego agent between a current time and a defined future time. Thus, normal operation and unexpected event frame violations can represent instances of poor driving behavior by the ego agent because they can indicate that the ego agent did not develop a driving plan such that there is a safe area in which the ego agent can drive for every time between the current time and the future time. In this way, the driving metrics for the ego agent can be used to assess the driving behavior of the ego agent.

In general, one innovative aspect of the subject matter described in this specification can be embodied in methods that include the actions of receiving data representing a state of a driving environment of the ego agent; computing a first plurality of reachable sets for one or more other road users in the driving environment using a normal set of movement parameters; computing a second plurality of reachable sets for the one or more other road users in the driving environment using an expanded set of movement parameters; computing a first drivable area for the ego agent based on the first plurality of reachable sets; computing a second drivable area for the ego agent based on the second plurality of reachable sets; and computing one or more driving metrics based on the first drivable area and the second drivable area computed for the ego agent.

Other implementations of this aspect include corresponding computer systems, apparatus, and computer programs recorded on one or more computer storage devices, each configured to perform the actions of the methods.

The foregoing and other implementations can each optionally include one or more of the following features, alone or in combination. In particular, one implementation includes all the following features in combination.

In some implementations, computing the second drivable area includes imposing a replanning delay for the ego agent.

In some implementations, each reachable set in each of the first plurality of reachable sets and the second plurality of reachable sets includes kinematic states of the one or more other road users.

In some implementations, each of the first drivable area and the second drivable area includes a first set of projections onto a ground plane of kinematic states of the ego agent; and the method further includes computing, for each reachable set in each of the first plurality of reachable sets and the second plurality of reachable sets, an occupied area using a second set of projections onto a ground plane of the kinematic states of one or more other road users in the corresponding reachable set; eliminating projections from the first set of projections of the first drivable area that overlap with one or more of the occupied areas corresponding to reachable sets in the first plurality of reachable sets; and eliminating projections from the first set of projections of the second drivable area that overlap with one or more of the occupied areas corresponding to reachable sets in the second plurality of reachable sets.

In some implementations, each of the normal set of movement parameters and the expanded set of movement parameters includes one or more available actions, and the one or more available actions in the normal set of movement parameters have reduced kinematic limits relative to the one or more available actions in the expanded set of movement parameters.

In some implementations, the method further includes repeatedly computing the first drivable area and the second drivable area for each of a plurality of time steps.

In some implementations, the one or more driving metrics includes an indication for each time step of the plurality of time steps of whether a normal operation frame violation exists in the time step, wherein a normal operation frame violation exists in the time step if the first drivable area computed at the time step does not extend to a time horizon; and an indication for each time step of the plurality of time steps of whether an unexpected event frame violation exists in the time step, wherein an unexpected event frame violation exists in the time step if the second drivable area computed at the time step does not extend to a time horizon.

In some implementations, the one or more driving metrics includes an indication that a normal operation frame violation exists in at least a first threshold number of continuous time steps of the plurality of time steps; and an indication that an unexpected event frame violation exists in at least a second threshold number of continuous time steps of the plurality of time steps; and the first threshold number is less than or equal to the second threshold number.

In some implementations, the method further includes determining whether any existing frame violation results from one of measurement noise in kinematic states of the one or more other road users at the time step; behavior of the one or more road users; or behavior of the ego agent.

In some implementations, the ego agent is a pedestrian and the data representing the state of the driving environment of the ego agent includes one or more of an x position of the center of the pedestrian, a y position of the center of the pedestrian, a yaw of the pedestrian, an angular speed of the pedestrian, a forward speed of the pedestrian, a forward acceleration of the pedestrian, or a forward jerk of the pedestrian.

In some implementations, the ego agent is a vehicle and the data representing the state of the driving environment of the ego agent includes one or more of an x position of the center of the vehicle, a y position of the center of the vehicle, a yaw of the vehicle, a steering angle of the vehicle, a steering rate of the vehicle, a forward speed of the vehicle, a forward acceleration of the vehicle, or a forward jerk of the vehicle.

In some implementations, the first plurality of reachable sets includes kinematic states at boundaries of each of the first plurality of reachable sets, and the second plurality of reachable sets includes kinematic states at boundaries of each of the second plurality of reachable sets.

In some implementations, computing the first drivable area includes computing the first drivable area based on a second normal set of movement parameters for the ego agent; and computing the second drivable area includes computing the second drivable area based on a second expanded set of movement parameters for the ego agent.

The technology described in this specification can be implemented so as to realize one or more of the following advantages.

Conventionally, reachability analysis assumes that each agent (e.g., ego agent or other road user of which the driving behavior is not being assessed) in a scenario has one reachable set. However, in any scenario with an ego agent and one or more independent, non-ego agents (e.g., other road users), there are other possible futures. In one set of futures, the world unfolds in a way that the ego agent has anticipated and incorporated into its current action plan; in these futures the ego agent does not need to respond to any surprising events in its surroundings. In the other set of futures, something unexpected happens in the world, and the ego agent must respond to it.

In some conventional models, the notion of response time is invoked to represent a delay when responding to some stimulus: for example, in a laboratory setting, a tone sounds, and a participant must press a button as quickly as possible in response. However, response time is a difficult concept to map to a complex set of evolving stimuli as in a driving scenario. Furthermore, the concept of a response time is undefined in a situation with no clear event boundaries, such as in the absence of a surprising stimulus.

In many model-based driving assessment algorithms, response time is realized as a control delay, such that an ego agent cannot exert any actions in a future time until the response time has elapsed. While this implementation of a response time is fairly reasonable assuming a singular surprising stimulus (e.g., a sudden hard brake by an agent in front of the ego agent), applying the response time to unsurprising situations unduly penalizes the ego agent in those situations, effectively freezing the ego agent during the number of seconds equal to the control delay for each possible future.

The techniques described herein address these issues by providing for the computation of two reachable sets for each agent. In computing the first reachable set, the actions of the ego agent and other non-ego agents are defined based on a normal set of movement parameters. The normal set of movement parameters corresponds to the set of futures that for unsurprising events that fall within thresholds for ordinary actions and is thus characterized by a smaller set of available actions. Additionally, in computing the first reachable set, no delay is imposed on the ego agent, as it is assumed that, in the absence of surprising events, an ego agent can carry out an existing plan of action without needing to delay in order to form a new plan.

In computing the second reachable set, the actions of the ego agent and non-ego agents are defined based on an expanded set of movement parameters, corresponding to the set of futures that include surprising or unexpected events. The expanded set of movement parameters is characterized by a larger set of available actions as compared to the normal set of movement parameters, so as to account for the possibility of surprising actions occurring.

Additionally, in computing the second reachable set, a replanning delay is imposed on the ego agent, such that the ego agent is prevented from responding to any action until the replanning delay has lapsed. The imposition of a replanning delay in computing the second reachable set helps to provide a more realistic analysis of the driving behavior of the ego agent. If something unexpected happens in the environment, the ego agent realistically would need time to detect the unexpected occurrence and respond to it, and so would not be able to respond prior to the expiration of the replanning delay.

Thus, the techniques described herein are advantageous over conventional techniques because the techniques described herein help to provide a more realistic reachability analysis of driving agents by accounting for other sets of possible futures that could realistically unfold for an ego agent at any given time. In addition to being more realistic, accounting for two sets of possible futures can be advantageous because a higher standard can be used to assess the driving behavior of the ego agent under the first set of possible futures (i.e., the set of futures that correspond to situations in which road users in the environment surrounding the ego agent act in a way that the ego agent has anticipated and incorporated into a current action plan). Because the first set of possible futures is anticipated by the ego agent, one would expect the ego agent to be more likely to drive in a way that avoids potential future safety hazards or collisions when accounting for the first set of possible futures. Alternatively, when accounting for the first set of possible futures, one might expect the ego agent to drive in a way that could lead to potential future safety hazards or collisions for fewer continuous timesteps, as compared to when accounting for the second set of possible futures.

This use of separate standards can be advantageous because it can allow for fine tuning of the sensitivity and the specificity of the assessment of the driving behavior of the ego agent. For example, holding ego agents to standards that are too low can result in failing to detect lapses in ideal driving behavior, whereas holding ego agents to standards that are too high can result in detecting excess lapses in ideal driving behavior, including possible lapses that are irrelevant. Thus, it can be useful to adjust the standard to which ego agents are held based on assumptions about the behavior and/or driving capabilities of the ego agent and other non-ego agents.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram that illustrates an example on-board system.
FIG. 2 is a diagram of an example situation in which there is no drivable area for an autonomously driven vehicle.
FIG. 3 is a diagram of an example situation in which there is a first drivable area, but no second drivable area, for an autonomously driven vehicle.
FIG. 4 is a diagram of an example situation in which there is a frame violation for an autonomously driven vehicle.
FIGS. 5A-5B are diagrams illustrating example parts of a process of computing one or more driving metrics based on computed drivable areas.
FIG. 6 is an illustration of three sets of snapshots in time that would result in a system determining that a frame violation exists for at least a threshold number of continuous timesteps.
FIG. 7 is a flowchart of an example process for assessing driving behavior of an agent.

Like reference numbers and designations in the various drawings indicate like elements.

### DETAILED DESCRIPTION

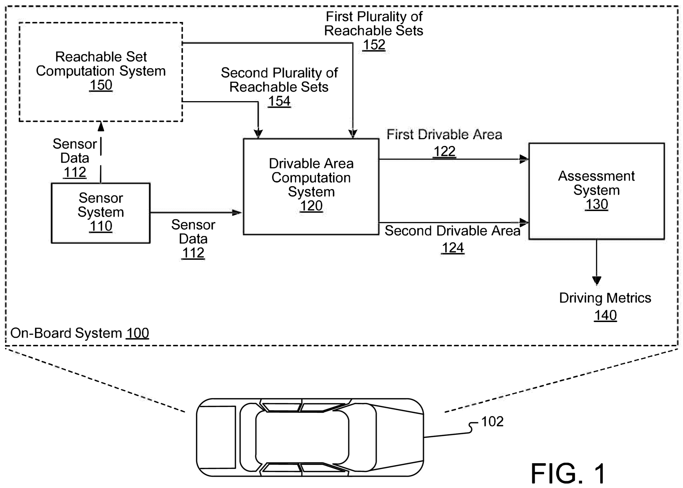

FIG. 1 is a diagram that illustrates an example on-board system. The on-board system 100 is an example of a system that can implement the driving behavior assessment techniques described in this specification. The on-board system 100 can be a physical system mounted in an autonomous vehicle. The techniques described in this specification can be performed in another computing system having one or more computers, for example, in a data center in order to assess past driving behaviors or driving behaviors in simulation.

The on-board system 100 includes hardware and software components, some or all of which can be physically located on-board a vehicle 102. The vehicle 102 is an example of an ego agent whose driving behavior can be assessed according to the techniques described in this specification. The vehicle 102 in FIG. 1 is illustrated as an automobile, but the on-board system 100 can be located on-board any appropriate vehicle type. The vehicle 102 can be a fully autonomous vehicle that determines and executes fully autonomous driving decisions in order to navigate through an environment. The vehicle 102 can also be a semi-autonomous vehicle that presents information to aid a human driver. For example, in response to determining that another vehicle in front of the vehicle 102 has stopped suddenly, the on-board system 100 may autonomously apply the brakes of the vehicle 102 or otherwise autonomously change the trajectory of the vehicle 102 to prevent a collision between the vehicle 102 and the other vehicle.

The on-board system 100 includes a sensor system 110 which provides the capability for the on-board system 100 to "see" the environment in the vicinity of the vehicle 102 by collecting sensor data 112. More specifically, the sensor system 110 includes one or more sensors, some of which are configured to receive reflections of electromagnetic radiation from the environment in the vicinity of the vehicle 102. For example, the sensor system 110 can include lidar systems that detect reflections of laser light, radar systems that detect reflections of radio waves, and/or camera systems that detect reflections of visible light.

The sensor system 110 continually (i.e., at each of multiple time steps) captures raw sensor data which can indicate the directions, intensities, and distances travelled by reflected radiation. For example, a sensor in the sensor system 110 can transmit one or more pulses of electromagnetic radiation in a particular direction and can measure the intensity of any reflections as well as the time that the reflection was received. A distance can be computed by determining the time that elapses between transmitting a pulse and receiving its reflection. Each sensor can continually sweep a particular space in altitude, azimuth, or both. Sweeping in azimuth, for example, can allow a sensor to detect multiple objects along the same line of sight. The sensor data 112 can include the distances computed by each sensor in the sensor system 110, for each direction in which the sensor sweeps, for each of the multiple time steps at which the sensor system 110 captures raw sensor data.

In some implementations, the sensor data 112 can include one or more of an x position of the center of the vehicle 102, a y position of the center of the vehicle 102, a yaw of the vehicle 102, a steering angle of the vehicle 102, a steering rate of the vehicle 102, a forward speed of the vehicle 102, a forward acceleration of the vehicle 102, or a forward jerk of the vehicle 102.

In some implementations of the technology described herein, the system 100 can be a system that assesses the movement behavior of a pedestrian (rather than a vehicle). In such implementations, the sensor data 112 can include one or more of an x position of the center of the pedestrian, a y position of the center of the pedestrian, a yaw of the pedestrian, an angular speed of the pedestrian, a forward speed of the pedestrian, a forward acceleration of the pedestrian, or a forward jerk of the pedestrian.

The system 100 provides the sensor data 112 to each of a drivable area computation system 120 and a reachable set computation system 150.

The reachable set computation system 150 is configured to compute reachable sets for the vehicle 102 and one or more other road users in the driving environment.

The drivable area computation system 120 is configured to compute drivable areas for the vehicle 102. In some implementations, the drivable area computation system 120 computes the drivable areas based on reachable sets for the vehicle 102.

For example, the reachable set computation system 150 can compute a reachable set for an agent (e.g., one of the other road users or the vehicle 102) *at* a given time t, and *for* a given future time *τ*.

A reachable set at a given time t for a given future time *τ* is a set of kinematic states that can be attained by the agent at the given future time τ based on the state of the environment that can be inferred from the sensor data 112 collected at the given time t.

The reachable set computation system 150 can compute reachable sets based on data derived from the sensor data 112 that was collected at a given time t and a set of movement parameters. Specifically, the reachable set computation system 150 can generate a representation of the current state of the vehicle 102 at time t, a representation of one or more other road users in the environment at time t, and/or the environment at time t using the sensor data 112 collected at time t. The reachable set computation system 150 can compute one or more reachable sets for one or more future times τ based on the current states at time t, in combination with an appropriate set of movement parameters.

The reachable set computation system 150 can compute the reachable sets based on data derived from the sensor data 112 that was collected at time t, such as road geometry, location of static obstacles, action capabilities of the one or more other road users, and/or perceptual capabilities of the one or more other road users. The reachable set computation system 150 can also compute the reachable sets based on road rules, social norms, uncertainty in perceptual capabilities of the vehicle 102, uncertainty in action capabilities of the vehicle 102, or uncertainty in behaviors of one or more other road users.

In some implementations, the reachable set computation system 150 computes reachable sets at a given time t for multiple future times *τ*. In such implementations, the reachable set computation system 150 can compute a reachable set for a future time (*τ*+ *Δτ*) by applying a kinematic model to a kinematic state of a reachable set computed for future time *τ*. The kinematic model can be applied to each kinematic state included in the reachable set computed for future time *τ* to generate multiple reachable sets for future time (*τ*+ *Δτ*), one for each of the kinematic states included in the reachable set computed for future time *τ*. The set of kinematic states that can be attained by the agent at the future time (*τ*+ *Δτ*) (e.g., the reachable set for the agent for the future time (*τ*+ *Δτ*) ) can include each of multiple reachable sets corresponding to each of the kinematic states in the reachable set for future time *τ*.

In some implementations, the reachable set computation system 150 can use the following equation to compute subsequent reachable sets for one or more future times using a kinematic state of an initial reachable set: ${R}_{t} \left(τ+Δτ\right) = \left\{s+Δτ⋅f′\left(s, u\right):s∈{R}_{t}\left(τ\right),u∈U\left(τ\right)\right\}$ where s is a kinematic state of an initial reachable set computed for a future time *τ*, *u* is an element from a control-value set, *t* is the current time at which the reachable sets are being computed, *U(τ)* is the set of all available controls at time *τ*, *Rₜ(τ)* is the reachable set for future time *τ* computed based on sensor data collected at time t, *Rₜ(τ* + *Δτ)* is the reachable set to be computed at a time *Δτ* in the future from time *τ*, and *f* is the kinematic model used to compute the reachable sets.

In this way, the reachable set computation system 150 can compute reachable sets for multiple future times, based on sensor data collected at current time t. The frequency of the multiple future times can be any frequency. For example, the frequency can be around 5Hz.

In some implementations, the reachable set for a given agent (e.g., vehicle 102 or one of the other road users) at a time t is represented as a set of agent states that are reachable at a future time *τ* by the agent according to the appropriate movement parameters, including any kinematic limits on the actions of the agent. For example, each agent state can be represented as a node, and the set of agent states can be represented as a convex hull including the nodes. The reachable set computation system 150 can determine the set of agent states for the future time *τ* by constructing a reachability graph for the agent through time. For example, node A can correspond to a particular agent state at time A. Nodes B can correspond to agent states that are reachable at time B, the next time step after time A, from node A. The system can recompute the convex hull to include the nodes B.

In some implementations, the reachable sets computed by the reachable set computation system 150 can include kinematic states at the boundaries of the respective reachable set. In some implementations, one or more of the reachable sets can include kinematic states at the boundaries of the respective reachable set and exclude all other kinematic states which would otherwise be in the respective reachable set. This implementation can be advantageous because it reduces the computational power required to compute the one or more reachable sets, while preserving the kinematic states in the reachable set that are of greatest interest (kinematic states at the boundaries of reachable sets tend to be of greatest interest in most applications of the techniques described herein, such as computing collisions or safety margins).

The reachable set computation system 150 can compute reachable sets based on data derived from the sensor data 112 and a set of movement parameters.

Each set of movement parameters can include one or more available actions to be taken by an agent (e.g., the vehicle 102 or one of the one or more other road users). For example, each set of movement parameters can include actions such as braking at a specific rate of acceleration, driving at a specific speed, and turning in a specific direction. Each set of movement parameters can also include actions by the agent that include a combination of any of these actions.

The actions included in each set of movement parameters can have kinematic limits. Kinematic limits are limits on the types of actions that can be included in the set of movement parameters. Kinematic limits can be determined by physical limitations of the agent in a given environment, traffic rules or other laws that govern the given environment, or both.

For example, each set of movement parameters can include the actions of braking at a range of rates of acceleration, from a minimum rate of acceleration up to a maximum rate of acceleration. The minimum and maximum rates of acceleration define kinematic limits for the actions in the set of movement parameters. In this example, actions which include braking at a rate of acceleration that exceeds the maximum rate of acceleration would not be included in the set of movement parameters. Similarly, actions which include braking at a rate of acceleration that falls below the minimum rate of acceleration would not be included in the set of movement parameters.

As another example, each set of movement parameters can include the actions of driving at a range of speeds, from a minimum speed up to a maximum speed. The minimum and maximum speeds define kinematic limits for the actions in the set of movement parameters. In this example, actions which include driving at a speed that exceeds the maximum speed would not be included in the set of movement parameters. Similarly, actions which include driving at a speed that falls below the minimum speed would not be included in the set of movement parameters.

The reachable set computation system 150 can compute a first plurality of reachable sets 152 for the one or more other road users based on data derived from the sensor data 112 and a normal set of movement parameters. The first plurality of reachable sets 152 can include, for each of the other road users, a reachable set computed at a current time t for a future time *τ*. The reachable set computation system 150can also compute a second plurality of reachable sets 154 for the one or more other road users based on data derived from the sensor data 112 and an expanded set of movement parameters. The second plurality of reachable sets 154 can include, for each of the other road users, a reachable set computed at a current time t for a future time *τ*.

The actions included in the expanded set of movement parameters can have expanded kinematic limits relative to corresponding actions included in the normal set of movement parameters. Having expanded kinematic limits means that the range of actions included in the expanded set of movement parameters is larger than the range of actions included in the normal set of movement parameters.

For example, if the normal set of movement parameters has kinematic limits defined by a minimum rate of acceleration in braking and a maximum rate of acceleration in braking, the expanded set of movement parameters can have kinematic limits defined by a different minimum rate of acceleration in braking and a different maximum rate of acceleration in braking, where the different minimum rate is lower than the minimum rate and the different maximum rate is higher than the maximum rate.

As another example, if the normal set of movement parameters has kinematic limits defined by a minimum speed in driving and a maximum speed in driving, the expanded set of movement parameters can have kinematic limits defined by a different minimum speed in driving and a different maximum speed in driving, where the different minimum speed is lower than the minimum speed and the different maximum speed is higher than the maximum speed.

The normal set of movement parameters can correspond to situations in which road users in the environment surrounding the agent act in a way that the agent has anticipated and incorporated into a current action plan. The expanded set of movement parameters can correspond to situations in which road users in the environment surrounding the agent act in unexpected ways that the agent has not incorporated into a current action plan.

The reachable set computation system 150 can also compute reachable sets for the vehicle 102. For example, the reachable set computation system 150 can compute a first reachable set for the vehicle 102 for future time *τ* based on a normal set of movement parameters. In some implementations, the normal set of movement parameters is a second normal set of movement parameters for the vehicle 102. The reachable set computation system 150 can compute a second reachable set for the vehicle 102 for future time *τ* based on an expanded set of movement parameters. In some implementations, the expanded set of movement parameters is a second expanded set of movement parameters for the vehicle 102. The reachable set computation system 150 can compute the reachable sets based on the sensor data 112 and the set of movement parameters as described above.

In some implementations, the reachable set computation system 150 can compute the second reachable set for the vehicle 102 by additionally imposing a replanning delay for the vehicle 102. The replanning delay can be a specified duration of time during which the vehicle 102 is unable to take actions. The purpose of the replanning delay can be to account for time required for the vehicle 102 to form a plan of one or more actions to take in response to detecting conditions in the driving environment.

For example, the reachable set computation system 150 can impose the condition that the vehicle 102 is unable to take any action during the period of time specified by the replanning delay when computing the set of kinematic states that can be attained by the vehicle 102 to be included in the second reachable set. As a more specific example, any given kinematic state that is only attainable by the vehicle 102 if it takes action before the expiration of the period of time specified by the replanning delay would not be included in the second reachable set computed by the reachable set computation system 150.

In implementations in which a reachable set for a given agent (e.g., vehicle 102 or other road user) for a future time *τ* is represented as a set of agent states that are reachable at time *τ* by the agent according to the appropriate movement parameters, imposing the replanning delay can include imposing the condition that the agent cannot take any action during the time period specified by the replanning delay in computing the agent states that are reachable at time *τ*. For example, an agent state that is reachable by the agent at time *τ* only if the agent takes action during the time period specified by the replanning delay would not be included in the second reachable set.

The drivable area computation system 120 is configured to compute both a first drivable area 122 for the vehicle 102 for a given future time *τ* and a second drivable area 124 for the vehicle 102 for a given future time *τ*. The first drivable area 122 is computed based on the first reachable set for the vehicle 102and the first plurality of reachable sets 152, and the second drivable area 124 is computed based on the second reachable set for the vehicle 102 and the second plurality of reachable sets 154.

In some implementations, the drivable area computation system 120 can compute the first drivable area 122 based on a normal set of movement parameters for the vehicle 102, and the second drivable area 124 based on an expanded set of movement parameters for the vehicle 102. The normal and expanded sets of movement parameters on which these computations are based can be defined in the same way as described above with reference to the computation of the first and second pluralities of reachable sets by the reachable set computation system 150.

In some implementations, for each of the reachable sets computed by the reachable set computation system 150, the reachable set computation system 150 can determine an occupied area for the respective reachable set from the reachability graph for a given agent for a particular time by mapping from the set of agent states to the corresponding set of spatial coordinates for those states. For example, if an agent's state is represented by the center and orientation of its bounding box (x, y, θ), then that state may project onto planar space as the set of x-y coordinates contained within the bounding box. The occupied area for the respective reachable set is the union of all projections from all agent states included in the reachable set.

The drivable area computation system 120 can compute the first drivable area 122 by pruning from the occupied area corresponding to the first reachable set for the vehicle 102 any sets of spatial coordinates that overlap with one or more of the occupied areas corresponding to the first plurality of reachable sets 152 computed for the one or more other road users by the reachable set computation system 150. The drivable area computation system 120 can compute the second drivable area 124 by pruning from the occupied area corresponding to the second reachable set for the vehicle 102 any sets of spatial coordinates that overlap with one or more of the occupied areas corresponding to the second plurality of reachable sets 154 computed for the one or more other road users by the reachable set computation system 150.

The first drivable area 122 computed by the drivable area computation system 120 can include the pruned occupied area corresponding to the first reachable set for the vehicle 102. The second drivable area 124 computed by the drivable area computation system 120 can include the pruned occupied area corresponding to the second reachable set for the vehicle 102.

The purpose of this pruning can be to account for the anticipated occupancy of the driving environment by other road users when computing drivable areas for the vehicle 102. In this way, the drivable areas computed by the drivable area computation system 120 can include areas on the ground plane, determined based on reachable sets, which are both possible for the vehicle 102 to reach and free from overlap with the anticipated occupancy of the one or more other road users.

In particular, the first drivable area 122 can include areas on the ground plane that are both possible for the vehicle 102 to reach and free from overlap with the anticipated occupancy of the one or more other road users, under the assumption that all agents (e.g., the vehicle 102 and the one or more other road users) are operating under the normal set of movement parameters. Meanwhile, the second drivable area 124 can include areas on the ground plane that are both possible for the vehicle 102 to reach and free from overlap with the anticipated occupancy of the one or more other road users, under the assumption that all agents (e.g., the vehicle 102 and the one or more other road users) are operating under the expanded set of movement parameters.

In some implementations, the drivable area computation system 120 can compute a first drivable area and an expanded, second drivable area for the vehicle 102 at a time t for each of multiple future times *τ*. The drivable area computation system 120 can use occupied areas corresponding to reachable sets computed by the reachable set computation system 150 for each of multiple future times *τ*.

For each of the multiple future times *τ* , the drivable area computation system 120 can prune from the occupied area for the vehicle 102 corresponding to the future time *τ* the occupied areas for the one or more other road users corresponding to the future time *τ*, in the manner of pruning described above, to yield two drivable areas for the future time *τ* . Thus, at each of the multiple future times *τ* , there can be a first drivable area for the vehicle 102 computed based on a normal set of movement parameters for all agents; and a second drivable area for the vehicle 102 based on an expanded set of movement parameters for all agents.

It can be possible that at least one of a first drivable area and a second drivable area, or both, does not exist for the vehicle 102 for a given future time. This can happen if the conditions at the given future time are such that there are no areas on the ground plane that are both possible for the vehicle 102 to reach and free from overlap with the anticipated occupancy of the one or more other road users.

For example, the entirety of the occupied area for the vehicle 102 for the given future time can overlap with one or more of the occupied areas for the one or more other road users for the given future time. Then the drivable area computation system 120 can eliminate the entirety of the occupied area for the vehicle 102 in the pruning process described above. This can result in the computation of a first or second drivable area for the given future time (under either a normal or expanded set of movement parameters, respectively) that is the empty set. In other words, the first or second drivable area would not exist at the given future time.

In some implementations, the drivable area computation system 120 can compute a set of first drivable areas and a set of second drivable areas at each time t of a plurality of timesteps. The set of first drivable areas can include a first drivable area, computed in the manner described above, computed at time t and for each future time *τ* from the time t until a time horizon. The time horizon can be a time that is a fixed number of timesteps after time t. The set of second drivable areas can include a second drivable area, computed in the manner described above, computed at time t and for each future time *τ* from the time t to the time horizon. At each time t of the plurality of timesteps, the drivable area computation system 120 can compute a new set of first drivable areas and a new set of second drivable areas based on the conditions of the driving environment at that time t, as detected by the sensor system 110.

Upon computing the first drivable area 122 and the second drivable area 124, the drivable area computation system 120 sends the computed drivable areas to the assessment system 130. Upon receiving the computed drivable areas, the assessment system 130 computes one or more driving metrics 140 based on the first drivable area 122 and the second drivable area 124.

In implementations in which the drivable area computation system 120 computes a set of first drivable areas and a set of second drivable areas for each time t of a plurality of timesteps, a first driving metric of the driving metrics 140 computed by the assessment system 130 can include a determination of whether the vehicle 102 is experiencing a normal operation frame violation at each time t. A normal operation frame violation at time t can be a state of the vehicle 102 in which the first drivable area computed at time t under a normal set of movement parameters for all agents does not extend to a time horizon. A first drivable area at time t does not extend to the time horizon if the set of first drivable areas computed for the vehicle 102 at time t does not include a first drivable area for at least one of the future times *τ* until the time horizon. In other words, a normal operation frame violation exists at time t if, under a normal set of movement parameters for all agents, a first drivable area for the vehicle 102 does not exist for at least one of the future times *τ* until the time horizon.

A second driving metric of the driving metrics 140 computed by the assessment system 130 can include a determination of whether the vehicle 102 is experiencing an unexpected event frame violation at each time t. An unexpected event frame violation can be a state of the vehicle 102 in which the second drivable area computed at time t under an expanded set of movement parameters for all agents does not extend to a time horizon. The second drivable area does not extend to the time horizon if the set of second drivable areas computed for the vehicle 102 at time t does not include a second drivable area for at least one of the future times *τ* until the time horizon. In other words, an unexpected event frame violation exists at time t if, under an expanded set of movement parameters for all agents, a second drivable area for the vehicle 102 does not exist for at least one of the future times *τ* until the time horizon.

The frequency of the plurality of timesteps at which the assessment system 130 determines whether vehicle 102 is experiencing either of a normal operation frame violation or an unexpected event frame violation can be any appropriate frequency. The frequency can preferably be chosen to balance computational cost with kinematic accuracy. For example, the frequency can be around 5Hz.

It can be advantageous to determine whether a first or unexpected event frame violation exists for the vehicle 102 at a given timestep because the existence of a first or unexpected event frame violation can indicate that the vehicle 102 is not behaving such that there is a safe path of travel for the vehicle 102 from the current time t until the time horizon. In this way, the existence of a first or unexpected event frame violation can indicate poor driving behavior by the vehicle 102.For example, if the vehicle 102 behaves in a way that does not account for anticipated occupancies of the driving environment in the future by one or more other road users, a first or unexpected event frame violation can exist for the vehicle 102. As a more specific example, the vehicle 102 may be driving at a speed that does not account for the possibility that a road user driving in front of the vehicle 102 could slow down at a given deceleration rate. The vehicle 102 can be driving at a speed such that the vehicle 102 will not be able to stop before crashing into the road user in front of the vehicle 102 if the road user slows down at the given deceleration. In this case, the driving behavior of the vehicle 102 can be assessed as poor or undesirable.

In some implementations, the vehicle 102 can take one or more actions in response to a determination that a first or an unexpected event frame violation exists at a given timestep. For example, the vehicle 102 can take one or more actions to improve its driving behavior, e.g., such that the first or unexpected event frame violation does not exist at a future timestep. In some examples, the vehicle 102 can take actions such as slowing down, applying the brakes, turning, or any combination of these. In implementations in which the techniques are used to assess past driving behaviors or driving behavior in simulation, a system assessing driving behavior can respond by marking a driving plan followed by an ego agent as an anomalous plan to be revised.

In some implementations, the one or more actions taken by the vehicle 102 can depend on whether the assessment system 130 determines that a normal operation frame violation exists for the vehicle 102 for a given timestep, as opposed to determining that only an unexpected event frame violation - and not a normal operation frame violation - exists for the vehicle 102 for a given timestep. A normal operation frame violation can be indicative of a more serious situation for the vehicle 102 because it is determined under a normal set of movement parameters. Thus, a normal operation frame violation indicates that there are no safe areas in which the vehicle 102 can drive even under the assumption that other road users drive in a way that is predictable to the vehicle 102. Therefore, in response to a determination that a normal operation frame violation exists for the vehicle 102, the vehicle 102 can take one or more actions that are more immediate or drastic.

Meanwhile, if the vehicle 102 experiences an unexpected event frame violation without experiencing a normal operation frame violation, the situation for the vehicle 102 can be less serious. An unexpected event frame violation is determined under an expanded set of movement parameters. Thus, if the vehicle 102 experiences an unexpected event frame violation without experiencing a normal operation frame violation, there may be no safe areas in which the vehicle 102 can drive only under the assumption that other road users behave in less predictable ways that can be difficult for the vehicle 102 to predict. Therefore, in response to a determination that an unexpected event frame violation - and not a normal operation frame violation - exists for the vehicle 102, the vehicle 102 can take one or more actions that are less immediate or drastic.

For example, the assessment system 130 can determine that a normal operation frame violation exists because the vehicle 102 will not be able to stop before crashing into a road user in front of the vehicle 102 if the road user behaves under a normal set of movement parameters (e.g., slows down at a moderate deceleration rate). In response, the vehicle 102 can reduce its speed by a larger amount and more quickly than it would if the assessment system 130 had determined that only an unexpected event frame violation existed. The assessment system 130 can determine that only an unexpected event frame violation (and not a normal operation frame violation) exists because the vehicle 102 will not be able to stop before crashing into a road user in front of the vehicle 102 if the road user behaves under an expanded set of movement parameters (e.g., slows down at a high or unpredictable deceleration rate). In response, the vehicle 102 can reduce its speed by a smaller amount and more slowly.

In implementations in which the drivable area computation system 120 computes a set of first drivable areas and a set of second drivable areas for each timestep of a plurality of timesteps, one of the driving metrics 140 computed by the assessment system 130 can include a determination of whether either of a normal operation frame violation or a unexpected event frame violation exists for the vehicle 102 in at least a threshold number of continuous timesteps.

In some implementations, one of the driving metrics 140 computed by the assessment system 130 can include a determination of whether a normal operation frame violation exists for the vehicle 102 in at least a first threshold number of continuous timesteps, and whether a unexpected event frame violation exists for the vehicle 102 in at least a second threshold number of continuous timesteps. In some implementations, the first threshold number can be less than or equal to the second threshold number.

It can be advantageous for the first threshold number to be less than or equal to the second threshold number because normal operation frame violations are frame violations determined under a normal set of movement parameters. The normal set of movement parameters can correspond to more predictable actions by the agents, implying that it is easier for the vehicle 102 to anticipate actions by other road users and thus drive in a way that avoids a normal operation frame violation. Thus, limiting the size of the first threshold number can result in holding the driving behavior of the vehicle 102 to a higher standard under the normal set of movement parameters, when it is easier for the vehicle 102 to anticipate actions by other road users.

On the other hand, unexpected event frame violations are frame violations determined under an expanded set of movement parameters, which can correspond to less predictable actions by the agents. This can imply that it is more difficult for the vehicle 102 to anticipate actions by other road users and drive in a way that avoids an unexpected event frame violation. Thus, allowing the size of the second threshold number to be larger can result in holding the driving behavior of the vehicle 102 to a lower standard under the expanded set of movement parameters, when it is more difficult for the vehicle 102 to anticipate actions by other road users.

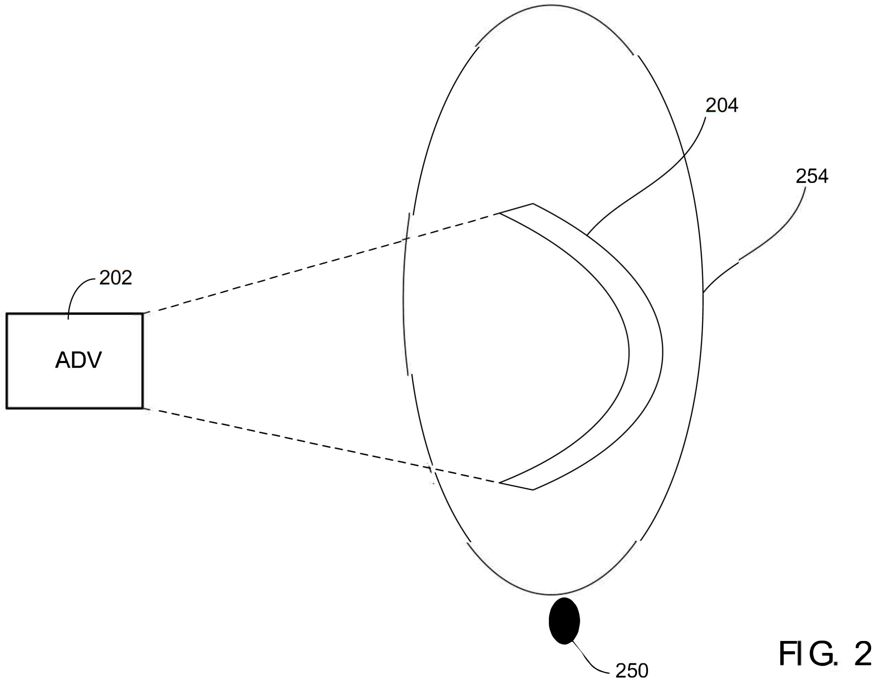

FIG. 2 is a diagram of an example situation in which there is a frame violation for an autonomously driven vehicle. FIG. 2 shows an example occupied area 204 for an ADV 202 computed at a given time t for a given future time *τ*. The ADV 202 is an example ego agent. FIG. 2 also shows another agent in the environment of the ADV 202, a pedestrian 250. FIG. 2 shows the occupied area 254 for the pedestrian 250 computed at time t for future time *τ*.

The diagram of FIG. 2 can represent a number of realistic driving situations. For example, the ADV 202 can be an autonomously driven vehicle that is driving down a street. The pedestrian 250 can be a pedestrian on a side of the street preparing to cross the street. The behavior of the ADV 202 as it drives down the street, with respect to the pedestrian 250 preparing to cross the street, can be assessed using the techniques described herein.

The occupied areas 204 and 254 of FIG. 2 illustrate the absence of a drivable area for the ADV 202 for future time *τ*. For example, a system such as the system 100 described above can compute the occupied areas 204 and 254 at time t for future time *τ*. The system can be a system that is on board the ADV 202. For example, the system can compute the occupied areas 204 and 254 based on data collected by a sensor system configured to collect data related to the driving environment of the ADV 202. The system can also compute the occupied areas 204 and 254 based on a set of movement parameters that define one or more available actions to be taken by the ADV 202 and the pedestrian 250, respectively. The system can also compute the occupied areas 204 and 254 based on constraints such as social norms and road rules. For example, the system can compute the occupied areas 204 and 254 based on social norms and road rules governing the street down which the ADV 202 is driving.

Using this data collected by the sensor system at time t and the set of movement parameters, the system can determine a set of agent states for each of the ADV 202 and the pedestrian 250. As described above in reference to FIG. 1, the system can then compute the occupied areas 204 and 254 by projecting the set of agent states for the ADV 202 and the pedestrian 250, respectively, to the corresponding set of spatial coordinates on the ground plane. Thus, each of the occupied areas 204 and 254 includes the ground plane projections of a set of kinematically possible and acceptable agent states for the future time *τ* for the ADV 202 and the pedestrian 250, respectively.

After determining the relevant occupied areas, the system can compute a drivable area for the ADV 202 based on the occupied areas 204 and 254. In order to do this, the system can prune the occupied area 204 by eliminating any sets of spatial coordinates in the ground plane projections of the occupied area 204 that overlap with the ground plane projections in the occupied area 254. Thus, the drivable area computed by the system can include areas on the ground plane that are both kinematically possible and acceptable for the ADV 202 for the future time *τ*, and also free from overlap with the anticipated occupancy of the pedestrian 250 at the future time *τ*.

In some implementations, the system can compute a drivable area for the ADV 202 for each of multiple future times τ. For example, for each of the multiple future times τ, the system can compute the occupied areas for the ADV 202 and the pedestrian 250. For each future time *τ* , the system can then compute a drivable area for the ADV 202 based on the occupied areas. For simplicity, only the occupied areas for a single future time *τ* are shown in FIG. 2.

The occupied areas 204 and 254 shown in FIG. 2 represent an example in which there is no drivable area for the ADV 202 at the future time *τ*. In particular, since the occupied area 204 overlaps entirely with the occupied area 254, the system eliminates all of the occupied area 204 in computing the drivable area for the ADV 202 for the future time *τ*. Thus, the drivable area for the ADV 202 for the future time *τ* computed by the system is the empty set, i.e. there is no drivable area. The absence of a drivable area for the ADV 202 for the future time *τ* can result in a normal operation frame violation for the ADV 202. For example, if a defined time horizon is later than the future time *τ*, no drivable area exists for the ADV 202 for at least one time (e.g., the future time *τ*) in between the current time t and the time horizon, resulting in a frame violation.

A frame violation for the ADV 202 can indicate that the driving behavior of the ADV 202 is not desirable because there is no possible action that the ADV 202 can take to avoid entering an area that has the potential to be occupied by the pedestrian 250 at future time *τ*. In some implementations, an on-board system of the ADV 202 can determine that there is a frame violation for the ADV 202 for the future time *τ*. In response to such a determination, the on-board system can cause the ADV 202 to take one or more actions. For example, the on-board system can cause the ADV 202 to take one or more actions that can improve the driving behavior of the ADV 202 such that a drivable area exists for the ADV 202 for a time later than the future time *τ*. For example, the on-board system can cause the ADV 202 to apply brakes, to decelerate, to turn, or any combination of these. In implementations in which the techniques are used to assess past driving behaviors or driving behavior in simulation, a system for assessing driving behavior can respond by marking a driving plan followed by the ego agent as an anomalous plan to be revised.

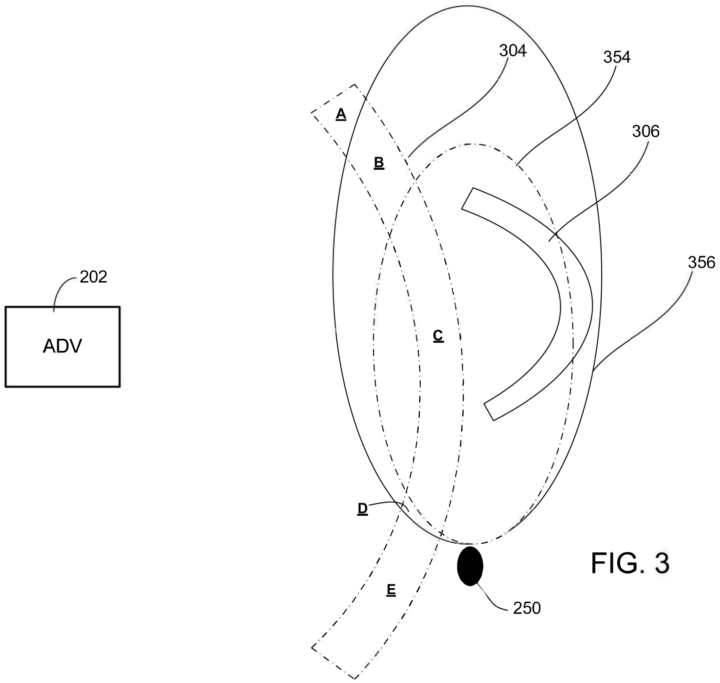

FIG. 3 is a diagram of an example situation in which there is a first drivable area, but no second drivable area, for an autonomously driven vehicle for a given future time *τ*. This can occur if an on-board system of the ADV 202, e.g., the on-board system 100 of FIG. 1, computes a drivable area for the ADV 202 for the given future time *τ* based on a normal set of movement parameters; and the on-board system computes that there is no drivable area for the ADV 202 for the given future time *τ* based on an expanded set of movement parameters. This might occur if, for example, the ADV 202 is driving in a way that sufficiently accounts for the more predictable actions that other road users can take under the normal set of movement parameters; but the ADV 202 drives in a way that does not account for the more surprising actions other road users can take under the expanded set of movement parameters. For example, the ADV 202 may account for the possibility that the pedestrian 250 crosses a street on which the ADV 202 is driving at a moderate walking pace. However, the ADV 202 may not account for the possibility that the pedestrian 250 suddenly jumps out into the street and crosses the street at a faster pace.

This situation can be an indication that the ADV needs to drive more defensively in order to be able to better account for surprising events. In implementations in which the techniques are used by an on-board system to assess driving behavior of the ADV online, the ADV can slow down or add space between it and one or more other road users. In implementations in which the techniques are used to assess past driving behaviors or driving behavior in simulation, the driving behavior of an ADV can be scored lower due to the absence of a second drivable area at future time *τ*.

In particular, FIG. 3 shows example occupied areas 304 and 306 of the ADV 202. FIG. 3 also shows the occupied areas 354 and 356 for the pedestrian 250. Regions A, B, C, D and E shown in FIG. 3 are regions in the occupied area 304.

The occupied areas 304 and 354 represent occupied areas of the ADV 202 and the pedestrian, respectively, that are computed for future time *τ* based on a normal set of movement parameters. A system such as the system 100 described above can compute the occupied areas 304 and 354 for the future time *τ* for the ADV 202 and the pedestrian 250, respectively. As described above, the system can compute the occupied areas 304 and 354 based on data collected by a sensor system at time t related to the driving environment of the ADV 202. The system can also compute the occupied areas 304 and 354 based on a normal set of movement parameters. The normal set of movement parameters can define one or more available actions to be taken by the ADV 202 and the pedestrian 250. The one or more available actions in the normal set of movement parameters can have certain kinematic limits, as described above. Thus, the occupied areas 304 and 354 are computed to represent situations in which road users in the environment surrounding the ADV 202 act in a way that the ADV 202 has anticipated and incorporated into a current action plan.

The occupied areas 306 and 356 represent occupied areas of the ADV 202 and the pedestrian, respectively, that are computed for future time *τ* based on an expanded set of movement parameters. A system such as the system 100 described above can compute the occupied areas 306 and 356 for the future time *τ* for the ADV 202 and the pedestrian 250, respectively. As described above, the system can compute the occupied areas 306 and 356 based on data collected by a sensor system at time t related to the driving environment of the ADV 202. The system can also compute the occupied areas 306 and 356 based on an expanded set of movement parameters. The expanded set of movement parameters can define one or more available actions to be taken by the ADV 202 and the pedestrian 250. The one or more available actions in the expanded set of movement parameters can have expanded kinematic limits relative to one or more corresponding actions in the normal set of movement parameters described above.

The system can also compute the occupied area 306 by imposing a replanning delay for the ADV 202. The replanning delay can be a specified duration of time during which the ADV 202 is unable to take actions. The purpose of the replanning delay can be to account for the time required for the ADV 202 to form a plan of one or more actions to take in response to detecting conditions in the driving environment. Thus, the occupied areas 306 and 356 are computed to represent situations in which road users in the environment surrounding the ADV 202 act in unexpected ways that the ADV 202 has not incorporated into a current action plan.

In the example shown in FIG. 3, the occupied area 304 of the ADV 202 is larger than the occupied area 306 of the ADV 202. This can be a result of the imposition of a replanning delay by the system in computing the occupied area 306. If the ADV 202 is unable to respond to its environment until after the replanning delay has lapsed, the range of possible actions available to the ADV 202 is smaller because any action that requires a response prior to the lapse of the replanning delay is not available. However, in some implementations, an occupied area for an ego agent computed based on an expanded set of movement parameters can be larger than an occupied area for the ego agent (here the ADV 202) computed based on a normal set of movement parameters, even if a replanning delay is imposed on the ego agent in the computation of the first occupied area. This can occur because the expanded set of movement parameters allows for a larger range of actions by the ego agent, which can increase the size of the occupied area computed for the ego agent based on the expanded set of movement parameters. This increase in size can outweigh the decrease in size due to the imposition of a replanning delay as described above, resulting in a larger occupied area.

Meanwhile, in the example shown in FIG. 3, the occupied area 356 of the pedestrian 250 is larger than the occupied area 354 of the pedestrian 250. This can be a result of the fact that the occupied area 356 is computed based on an expanded set of movement parameters, while the occupied area 354 is computed based on a normal set of movement parameters. As explained above, the expanded set of movement parameters allows for a larger range of actions by the pedestrian 250, which can increase the size of the corresponding occupied area.

The occupied areas 304, 306, 354, and 356 of FIG. 3 illustrate an example of a situation in which there is a first drivable area for the ADV 202 for the future time *τ*, but there is no second drivable area for the ADV 202 for the future time *τ*. In particular, the occupied areas 304 and 354 of FIG. 3 illustrate an example of a first drivable area for the future time *τ* for the ADV 202. A system such as the system 100 described above can compute a first drivable area for the future time *τ* for the ADV 202 based on the occupied areas 304 and 354. For example, the system can prune from the occupied area 304 sets of spatial coordinates that overlap with the occupied area 354, as described above in reference to FIG. 1. The first drivable area computed by the system can include areas on the ground plane that are both kinematically possible and acceptable for the ADV 202 for the future time *τ*, and also free from overlap with the anticipated occupancy of the pedestrian 250 at the future time *τ*, under the assumption that each of the ADV 202 and the pedestrian 250 act in accordance with a normal set of movement parameters.

In the example of FIG. 3, the system can prune from the occupied area 304 the region C, since this region overlaps with the occupied area 354. The remaining regions of the occupied area 304 (e.g., regions A, B, D and E) can define the first drivable area for the ADV 202 for future time *τ*.

The occupied areas 306 and 356 of FIG. 3 illustrate an example of the absence of a second drivable area for the future time *τ* for the ADV 202. A system such as the system 100 described above can compute a second drivable area for the future time *τ* for the ADV 202 based on the occupied areas 306 and 356. For example, the system can prune from the occupied area 306 sets of spatial coordinates that overlap with the occupied area 356, as described above in reference to FIG. 1. The second drivable area computed by the system can include areas on the ground plane that are both kinematically possible and acceptable for the ADV 202 for the future time *τ*, and also free from overlap with the anticipated occupancy of the pedestrian 250 at the future time *τ*, under the assumption that each of the ADV 202 and the pedestrian 250 act in accordance with an expanded set of movement parameters.

In the example of FIG. 3, the system can prune from the occupied area 306 every spatial coordinate in the occupied area 306, since the entirety of the occupied area 306 overlaps with the occupied area 356. Thus, there are no remaining regions of the occupied area 306 to define the second drivable area. Therefore, there is no second drivable area for the ADV 202 for future time *τ*.

In some implementations, the system can compute first and second drivable areas for the ADV 202 for each of multiple future times *τ* . For example, for each of the multiple future times *τ*, the system can compute two occupied areas for each of the ADV 202 and the pedestrian 250 (one corresponding to a normal set of movement parameters and another corresponding to an expanded set of movement parameters). For each future time *τ*, the system can then compute first and second drivable areas for the ADV 202 based on the occupied areas. For simplicity, only the occupied areas for a single future time *τ* are shown in FIG. 3.

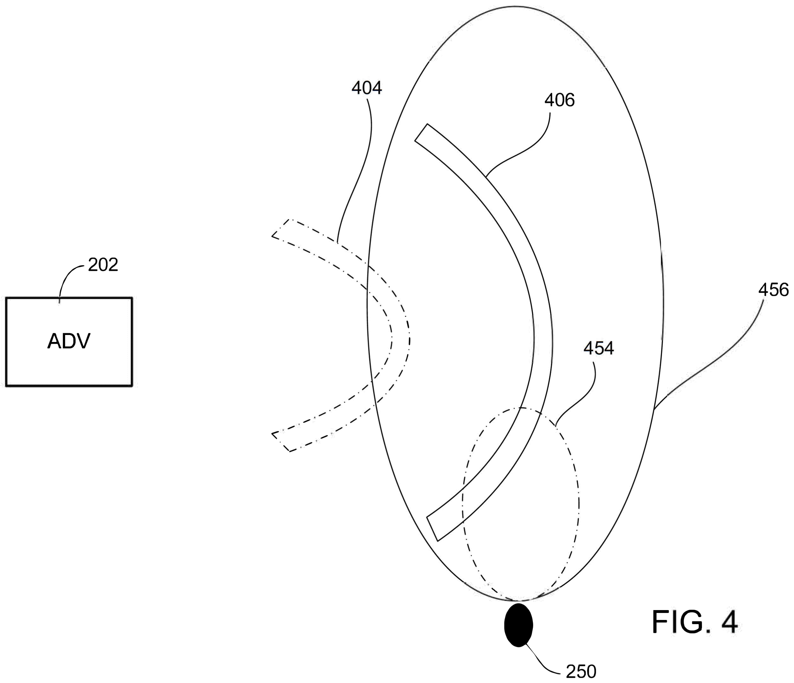

FIG. 4 is a diagram of an example situation in which there is a frame violation for an autonomously driven vehicle. The frame violation can be either a normal operation frame violation or an unexpected event frame violation, depending on whether agents are assumed to be acting under a normal set of movement parameters or an expanded set of movement parameters, respectively. FIG. 4 shows example occupied areas 404 and 406 of the ADV 202. FIG. 4 also shows the occupied areas 454 and 456 for the pedestrian 250.

The occupied areas 404 and 454 represent occupied areas of the ADV 202 and the pedestrian 250, respectively, for a first future time *τ* . A system such as the system 100 described above can compute the occupied areas 404 and 454 for the ADV 202 and the pedestrian 250, respectively, at the current time t for the first future time *τ*. The system can compute the occupied areas 404 and 454 based on data collected by a sensor system at time t related to the driving environment of the ADV 202. The system can also compute the occupied areas 404 and 454 based on a set of movement parameters. The set of movement parameters can define one or more available actions to be taken by the ADV 202 and the pedestrian 250. Thus, the occupied areas 404 and 454 can represent areas that the system - at time t - computes as being potentially occupied at the first future time *τ* by each of the ADV 202 and the pedestrian 250, respectively.

The occupied areas 406 and 456 represent occupied areas of the ADV 202 and the pedestrian 250, respectively, for a second future time *τ*'. The second future time *τ*' can be later than the first future time *τ*. The second future time *τ*' can be within a time horizon from the current time t. A system such as the system 100 described above can compute the occupied areas 406 and 456 for the second future time *τ*' for the ADV 202 and the pedestrian 250, respectively, at the current time t. The system can compute the occupied areas 406 and 456 based on data collected by a sensor system at time t related to the driving environment of the ADV 202. The system can also compute the occupied areas 406 and 456 based on a set of movement parameters defining one or more available actions to be taken by the ADV 202 and the pedestrian 250. In this way, the occupied areas 406 and 456 can represent areas that the system - at time t-computes as being potentially occupied at the second future time *τ*' by each of the ADV 202 and the pedestrian 250, respectively.

The occupied areas 404, 406, 454, and 456 of FIG. 4 illustrate an example of a frame violation for the ADV 202 at time t because no drivable area for the ADV 202 extends to the time horizon. In particular, a system such as the system 100 described above can compute a drivable area for the ADV 202 for each of the first future time *τ* and the second future time *τ*' based on the occupied areas 404, 406, 454, and 456. For example, the system can compute the drivable area for the first future time *τ* by pruning from the occupied area 404 any sets of spatial coordinates that overlap with the occupied area 454. Thus, the drivable area computed by the system for the first future time *τ* can include areas on the ground plane that are both kinematically possible and acceptable for the ADV 202 for the first future time *τ*, and also free from overlap with the anticipated occupancy of the pedestrian 250 at the first future time *τ*.

The system can compute the drivable area for the second future time *τ*' in a similar way, such that the drivable area computed by the system for the second future time *τ*' includes areas on the ground plane that are both kinematically possible and acceptable for the ADV 202 for the second future time *τ*', and also free from overlap with the anticipated occupancy of the pedestrian 250 at the second future time *τ*'.

The occupied areas shown in FIG. 4 represent an example in which there is a frame violation for the ADV 202 at the current time t. In particular, there is a drivable area for the ADV 202 for the first future time *τ*. This is because the occupied area 404 does not overlap with the occupied area 454. Therefore, in computing the drivable area for the ADV 202 for the first future time *τ*, the system does not prune any part of the occupied area 404. All of the occupied area 404 is then included in the drivable area for the ADV 202 for the first future time *τ*.

However, the drivable area for the ADV 202 for the first future time *τ* fails to extend to the time horizon because there is no drivable area for the ADV 202 for the second future time *τ*'. As shown in FIG. 4, all of the occupied area 406 overlaps with the occupied area 456. Therefore, in computing the drivable area for the second future time *τ*', the system prunes all of occupied area 406. Thus, the drivable area for the ADV 202 for the second future time *τ*' is the empty set, i.e. there is no second drivable area for the second future time *τ'*.

If the occupied areas shown in FIG. 4 are computed based on a normal set of movement parameters for each of the ADV 202 and the pedestrian 250, the frame violation for the ADV 202 is a normal operation frame violation. Meanwhile, if the occupied areas shown in FIG. 4 are computed based on an expanded set of movement parameters for each of the ADV 202 and the pedestrian 250, along with the imposition of a replanning delay on the ADV 202, the frame violation for the ADV 202 is an unexpected event frame violation.

Although a frame violation exists for the ADV 202 at the time t shown in FIG. 4, a frame violation can cease to exist for the ADV 202 at a future time t' later than t. For example, if the set of drivable areas for all future times *τ* from t' until the time horizon that is calculated by the system for the ADV 202 at the future time t' includes at least one drivable area for each future time *τ* until the time horizon, there will not be a frame violation for the ADV 202 at future time t'. This could occur if, for example, the pedestrian 250 has moved away from the ADV 202 by a future time t', such that, for each future time *τ* from the future time t' until the time horizon, there is at least one occupied area for the ADV 202 that does not entirely overlap all of the occupied areas of the pedestrian 250 at that future time.

Likewise, although a frame violation exists for the ADV 202 at the time t shown in FIG. 4, a frame violation may not have existed for the ADV 202 at an earlier time t_0 that came before time t. For example, the pedestrian 250 may have been a larger distance away from the ADV 202 at t_0. The increased distance of the pedestrian 250 at t_0 may have caused the system to compute occupied areas at t_0 such that, for each future time *τ* from t_0 until the time horizon, there was at least one occupied area for the ADV 202 that did not entirely overlap all of the occupied areas of the pedestrian 250 at that future time.

This could have occurred if, for example, the proximity of the pedestrian 250 to the ADV 202 shown in FIG. 4 was not predictable by the system such that the occupied areas of the ADV 202 and of the pedestrian 250 for each of the future times *τ* until the time horizon, computed by the system at t_0, did not entirely overlap. In this way, the system can have computed occupied areas at the earlier time t_0 such that no frame violation existed for the ADV 202 at t_0. In this example, the positioning of the pedestrian 250 shown in FIG. 4, and the resulting frame violation, would be an unexpected event that was not predicted by the system at t_0.

Alternatively, the earlier time t_0 may be sufficiently before the time t shown in FIG. 4 that the time horizon at t_0 is earlier than time t. This is possible because, as described above, the time horizon can be a time that is a fixed number of timesteps after the current time. Therefore, if t_0 is earlier than t by a number of timesteps greater than the fixed number of timesteps, the time horizon for t_0 can be before time t. In this example, the positions of the ADV 202 and the pedestrian 250 at t_0 and at each future time *τ* from t_0 until the time horizon may have caused the system to compute occupied areas at t_0 such that the computed occupied area of the ADV 202 did not overlap with the computed occupied area of the pedestrian 250 at each future time *τ* from t_0 until the time horizon. In this example, the positions of the ADV 202 and the pedestrian 250 shown in FIG. 4 that result in the computed occupied areas of the ADV 202 and the pedestrian 250 overlapping would only have occurred after the time horizon at t_0, causing the system to determine that no frame violation existed at t_0.

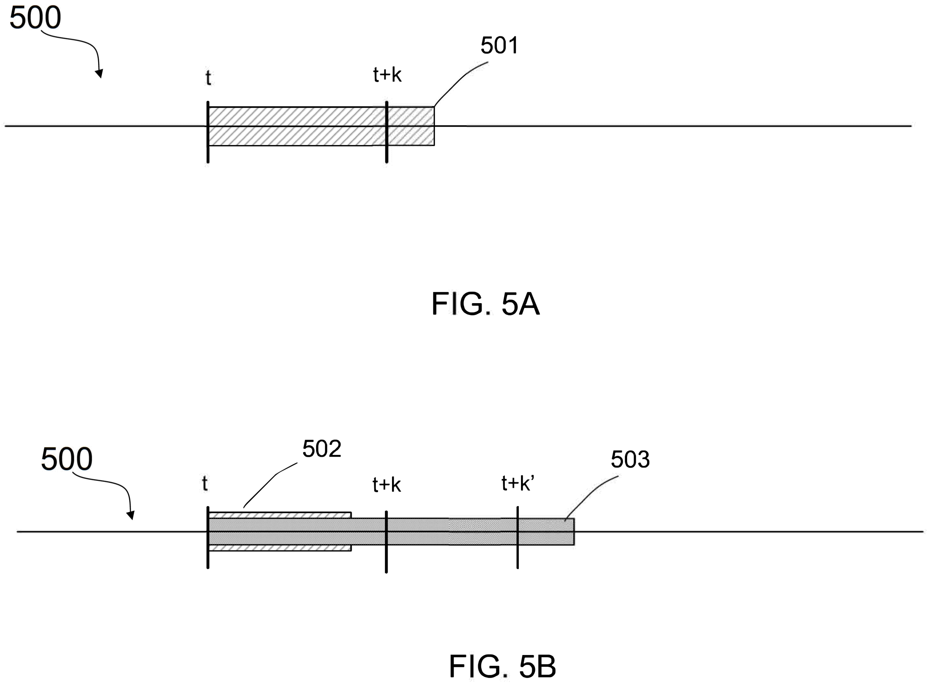

FIG. 5A is a diagram illustrating an example part of a process for computing a driving metric based on computed drivable areas. The part of the process for computing a driving metric can be carried out by a system such as the system 100 described above. The computed driving metric can be a determination of whether a frame violation exists for an ego agent in at least a threshold number of continuous timesteps.

FIG. 5A shows a timeline 500 and a duration of time 501 on the timeline 500. The timeline 500 can be a linear representation of a set of continuous timesteps for an ego agent. A first timestep being to the left of a second timestep signifies that the first timestep is earlier in time than the second timestep, while the first timestep being to the right of the second timestep signifies that the first timestep is later in time than the second timestep. The timesteps on the timeline 500 can be any suitable units of time. For example, the timesteps on the timeline 500 can be seconds.

Two timesteps are marked on the timeline 500 shown in FIG. 5A. The first timestep is at a time t which can represent an initial timestep for the ego agent. The second timestep is at a time t+ k, which can represent a time that is k timesteps after the time t. The number of timesteps represented by k can be a threshold number used by the system to determine a driving metric. In particular, in determining by the system whether a frame violation exists for at least a threshold number of continuous timesteps, k can be the threshold number of continuous timesteps.

The duration of time 501 can represent a duration of time for which a frame violation exists for the ego agent. In the example shown in FIG. 5A, the duration of time 501 includes time t and extends continuously from time t until a timestep later than t + k.

The duration of time 501 can have been determined by the system. For example, at each of the timesteps included in the duration of time 501, the system can have computed a set of drivable areas for the ego agent. The set of drivable areas computed by the system at a given timestep can include a drivable area for each future time *τ* from the given timestep until a time horizon, where the time horizon for the given timestep is a future time that is a fixed number of timesteps after the given timestep. The system can compute each drivable area in the set of drivable areas computed at a given timestep using the techniques described above.

Based on the set of drivable areas computed at a given timestep, the system can determine whether a frame violation exists at the given timestep. In particular, the system determines that a frame violation exists at the given timestep if the set of drivable areas computed at the given timestep indicates that no drivable area extends from the given timestep until the time horizon for the given timestep. In other words, the system determines that a frame violation exists at the given timestep if the set of drivable areas computed at the given timestep indicates that, for at least one future time *τ* from the given timestep until the time horizon, there is no drivable area for the ego agent.

If the computed drivable areas are based on a normal set of movement parameters, the frame violation can be a normal operation frame violation, as described above. If the computed drivable areas are based on an expanded set of movement parameters, the frame violation can be an unexpected event frame violation, as described above.

In this way, the system can determine whether a frame violation exists for each timestep of a duration of continuous timesteps. In the example shown in FIG. 5A, the system determines that a frame violation does exist for the ego agent for each timestep in the duration of time 501. Since the number of timesteps included in the duration of time 501 is greater than the threshold number k, the system determines that a frame violation exists for the ego agent in at least the threshold number of continuous timesteps.

Upon making this determination, the system can notify a user. In response to receiving a notification from the system that the system has determined that a frame violation exists for the ego agent in at least the threshold number of continuous timesteps, the user can make adjustments to an on-board system of the ego agent in order to improve the driving behavior of the ego agent in the future.

FIG. 5B is another a diagram illustrating an example part of a process for computing one or more driving metrics based on computed drivable areas. The part of the process for computing one or more driving metrics can be carried out by a system such as the system 100 described above. The computed one or more driving metrics can include a determination of whether a normal operation frame violation exists for an ego agent in at least a first threshold number of continuous timesteps, and a determination of whether an unexpected event frame violation exists for the ego agent in at least a second threshold number of continuous timesteps.

FIG. 5B shows a timeline 500, a duration of time 502 on the timeline 500, and a duration of time 503 on the timeline 500. The timeline 500 can be a linear representation of a set of continuous timesteps for an ego agent, as described above in reference to FIG. 5A.

Three timesteps are marked on the timeline 500 shown in FIG. 5B. The first timestep is at a time t, which can represent an initial timestep for the ego agent.

The second timestep is at a time t+ k, which can represent a time that is k timesteps after the time t. The number of timesteps represented by k can be a first threshold number used by the system to determine a driving metric based on a normal set of movement parameters. In particular, the system can determine whether a normal operation frame violation exists in at least the first threshold number k of continuous timesteps by computing a set of drivable areas for each timestep in a period of time based on the assumption that the ego agent and other road users act in accordance with a normal set of movement parameters. If the set of drivable areas thus computed for a given timestep are such that a drivable area does not extend to a time horizon for the given timestep, the system determines that a normal operation frame violation exists for the ego agent at the given timestep. By thus determining whether a normal operation frame violation exists for the ego agent at each timestep, the system determines whether a normal operation frame violation exists for at least the first threshold number k of continuous timesteps.

The duration of time 502 can represent a duration of time for which the system determines that a normal operation frame violation exists for the ego agent. In the example shown in FIG. 5B, the duration of time 502 includes time t and extends continuously from time t until a timestep earlier than t + k. The duration of time 502 can have been computed by the system in the manner described above. Therefore, the system determines that a normal operation frame violation does not exist for at least the first threshold number k of continuous timesteps.

The third timestep is at a time t+ k', which can represent a time that is k' timesteps after the time τ. The number of timesteps represented by k' can be a second threshold number used by the system to determine a driving metric based on an expanded set of movement parameters. In particular, the system can determine whether a unexpected event frame violation exists for at least the second threshold number k' of continuous timesteps by computing a set of drivable areas for each timestep in a period of time based on the assumption that the ego agent and other road users act in accordance with an expanded set of movement parameters. If the set of drivable areas thus computed for a given timestep are such that a drivable area does not extend to a time horizon for the given timestep, the system determines that an unexpected event frame violation exists for the ego agent at the timestep. By thus determining whether an unexpected event frame violation exists for the ego agent at each timestep, the system determines whether an unexpected event frame violation exists for at least the second threshold number k' of continuous timesteps.

The second threshold number k' can be larger than the first threshold number k. The difference between the first threshold number k and the second threshold number k' can relate to the fact that the first threshold number k corresponds to a normal set of movement parameters, and the second threshold number k' corresponds to an expanded set of movement parameters. As described above, it can be beneficial for a threshold number corresponding to a normal set of movement parameters to be smaller than a threshold number corresponding to an expanded set of movement parameters because the normal set of movement parameters can correspond to more predictable actions by other road users in the environment, implying that it is easier for the ego agent to anticipate actions by other road users and thus drive in a way that avoids a frame violation. Therefore, in assessing the driving behavior of the ego agent, it can be relevant that a frame violation exists for a smaller number of continuous timesteps under a normal set of movement parameters, as compared to the number of continuous timesteps at which it becomes relevant that a frame violation exists under an expanded set of movement parameters.

The duration of time 503 can represent a duration of time for which an unexpected event frame violation exists for the ego agent. In the example shown in FIG. 5B, the duration of time 503 includes time t and extends continuously from time t until a timestep later than t + k'. The duration of time 503 can have been computed by the system in the manner described above. Therefore, the system determines that an unexpected event frame violation does exist for at least the second threshold number k' of continuous timesteps.

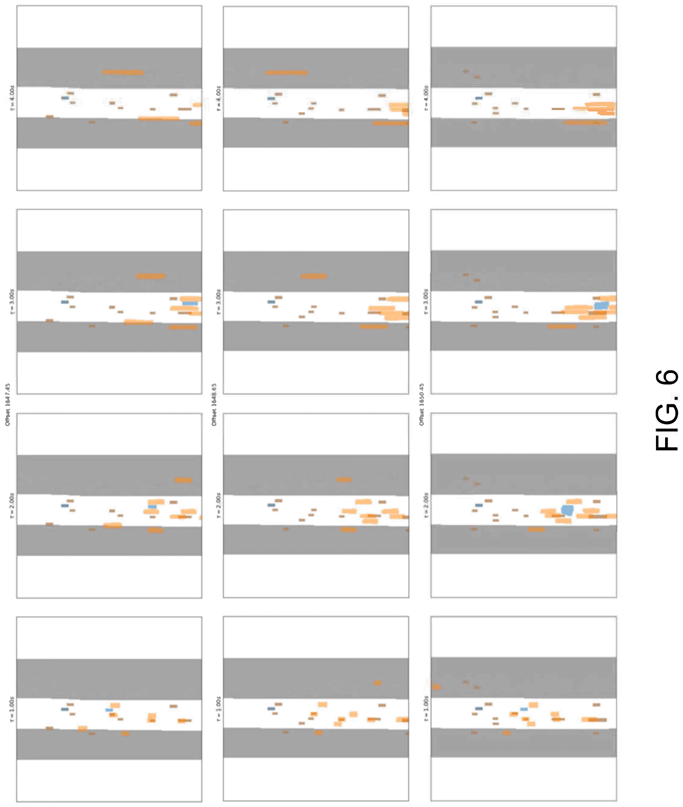

FIG. 6 is an illustration of three sets of snapshots in time that would result in a system determining that a frame violation exists for at least a threshold number of continuous timesteps. The system can be a system such as the system 100 described above.

FIG. 6 includes twelve images of an ego agent and other road users, arranged in a grid with 3 rows and 4 columns. In each image, the dark blue object represents an initial state of the ego agent at a current time t (labeled "Offset" at the top of each row in FIG. 6), the light blue object represents a predicted future state of the ego agent at a future time *τ* indicated above each image, and the orange objects represent the predicted future states of other road users at the future time *τ*.

Each row of the grid includes a set of images corresponding to the current time t with which each row is labeled (e.g., the "Offset" indicated at the top of each row). Each column of the grid includes a set of images corresponding to a future time *τ* after the current time t. Each image in the grid is a snapshot upon which the system bases computations that it makes at the current time t, where the computations are based on the predicted states of the ego agent and other road users at the future time *τ*.

For example, the image in the first row and first column of the grid is a snapshot upon which the system bases the computations that it makes at time t = 1647.45 (e.g., 1647.45 time units after some defined initial time), based on the predicted states of the ego agent and other road users at τ = 1.00 second following time t = 1647.45. As another example, the image in the second row and third column of the grid is a snapshot upon which the system bases the computations that it makes at time t = 1648.65 (e.g., 1648.65 time units after some defined initial time), based on the predicted states of the ego agent and other road users at τ = 3.00 seconds following time t = 1648.65.

The system can compute a drivable area for the ego agent based on each image in the grid, such that the computed drivable area is the drivable area computed by the system for the ego agent at the current time t, based on the predicted states of the ego agent and other road users at the future time *τ*.

For each time associated with a row of the grid of images shown in FIG. 6, the system can determine that a frame violation exists because no drivable area for the ego agent extends until a time horizon of τ =4.00 seconds. This is indicated by the fact that, for each time associated with a row shown in FIG. 6, for at least one future time *τ* at or before the time horizon of τ=4.00 seconds, the predicted future states of the ego agent and other road users shown in the corresponding image are such that the system would determine that there was no drivable area for the ego agent at the future time *τ*. For example, at the future time *τ*, other road users block the path of the ego agent such that there are no states that are both kinematically possible for the ego agent and avoid overlap with the states of the other road users at the future time *τ*.

Thus, in the example illustrated in FIG. 6, the system determines that a frame violation exists for the ego agent for at least a threshold number of continuous timesteps. For example, the threshold number can be equal to two. As described above, the system determines that a frame violation occurs at each of the times corresponding to a row in the grid. Assuming that a frame violation continues to exist for any continuous timesteps in between each of the times corresponding to a row in the grid, the system determines that a frame violation exists for the ego agent for at least a threshold number of continuous timesteps, where the threshold number is equal to two, because more than two timesteps lapse between the time corresponding to the first row of the grid (1647.45) and the time corresponding to the third and final row of the grid (1650.45).

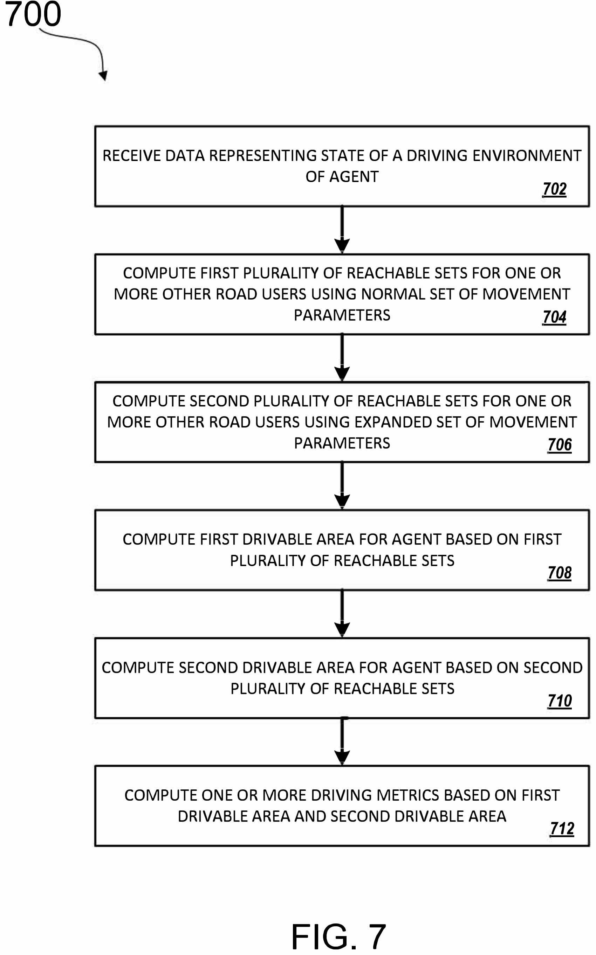

FIG. 7 is a flowchart of an example process 700 for assessing driving behavior of an ego agent. For convenience, the process 700 will be described as being performed by a system of one or more computers located in one or more locations. For example, an on-board system, e.g., the on-board system 100 of FIG. 1, appropriately programmed in accordance with this specification, can perform the process 700.

The system receives data representing a state of a driving environment of the ego agent (702). The system can receive data representing the state of the driving environment of the ego agent through a sensor system which can be included in the system, e.g., the sensor system 110 of FIG. 1. The sensor system can include components, such as those described above in reference to FIG. 1, that allow the sensor system to provide sensor data to the system that relates to the driving environment of the ego agent, such as reflections of electromagnetic radiation, laser light, radio waves, and/or visible light. The sensor data provided by the sensor system can characterize the state of the driving environment of the ego agent at a current time t at which the sensor system provides the sensor data. For example, the sensor data can provide information about one or more other road users (e.g., vehicles, pedestrians, bicycles, or any other agents on the same road as the ego agent) in the environment of the ego agent at time t. The information provided in the sensor data can include road geometry, location of static obstacles, action capabilities of the one or more other road users, and/or perceptual capabilities of the one or more other road users.

In some implementations, the ego agent is a pedestrian and the data representing the state of the driving environment of the ego agent includes one or more of an x position of the center of the pedestrian, a y position of the center of the pedestrian, a yaw of the pedestrian, an angular speed of the pedestrian, a forward speed of the pedestrian, a forward acceleration of the pedestrian, or a forward jerk of the pedestrian.

In some implementations, the ego agent is a vehicle and the data representing the state of the driving environment of the ego agent includes one or more of an x position of the center of the vehicle, a y position of the center of the vehicle, a yaw of the vehicle, a steering angle of the vehicle, a steering rate of the vehicle, a forward speed of the vehicle, a forward acceleration of the vehicle, or a forward jerk of the vehicle.

The system computes a first plurality of reachable sets for one or more other road users using a normal set of movement parameters (704). The system can compute the first plurality of reachable sets for a given future time *τ*. The system can use the information about the one or more other road users provided in the sensor data collected at the current time t, as described above. The system can also use road rules, social norms, and uncertainty in perceptual and action capabilities of the ego agent and the one or more other road users.

The system can also use a normal set of movement parameters, which is a set of available actions to be taken by one or more other road users. The actions in the set of available actions can have kinematic limits based on the action capabilities of the one or more other road users, as well as road rules and social norms. The kinematic limits of the actions in the normal set of movement parameters correspond to situations in which road users in the environment surrounding the ego agent act in a way that the ego agent has anticipated and incorporated into a current action plan, as described above in reference to FIG. 1. The system can use the information provided by the sensor system and the normal set of movement parameters to compute the first plurality of reachable sets for the one or more other road users for the future time *τ* as described above in reference to FIG. 1. In some implementations, the system can compute a first plurality of reachable sets at the current time t for each of multiple future times *τ*, as described above in reference to FIG. 1.

The system computes a second plurality of reachable sets of the one or more other road users using an expanded set of movement parameters (706). As with the computation of the first plurality of reachable sets, the system can compute the second plurality of reachable sets using information about the one or more other road users provided in the sensor data collected at the current time t, as well as other factors such as road rules and social norms. The system can also use an expanded set of movement parameters, which is a set of available actions to be taken by one or more other road users. The actions in the expanded set of movement parameters have expanded kinematic limits as compared to the actions in the normal set of movement parameters. For example, actions in the expanded set of movement parameters can be actions with higher speeds and acceleration rates than those in the normal set of movement parameters. The differences between actions in the normal and expanded sets of movement parameters are described in further detail above in reference to FIG. 1. The expanded kinematic limits of the actions in the expanded set of movement parameters correspond to situations in which road users in the environment surrounding the ego agent act in unexpected ways that the ego agent has not incorporated into a current action plan, as described above in reference to FIG. 1. The system can use the information provided by the sensor system and the expanded set of movement parameters to compute the second plurality of reachable sets for the one or more other road users for the future time *τ* as described above in reference to FIG. 1. In some implementations, the system can compute a second plurality of reachable sets at the current time t for each of multiple future times *τ*, as described above in reference to FIG. 1.

The system computes a first drivable area for the ego agent based on the first plurality of reachable sets (708). In computing the first drivable area, the system can first compute a reachable set for the future time *τ* for the ego agent based on sensor data collected at the current time t and a normal set of movement parameters, in a similar manner to computing the first plurality of reachable sets for the one or more other road users as described above. In some implementations, the normal set of movement parameters is a second normal set of movement parameters for the ego agent. The system can then determine an occupied area for the reachable set for the ego agent by mapping the set of agent states in the reachable set to the corresponding set of spatial coordinates for those states. (i.e., determining a ground plane projection of the reachable set). The system can determine an occupied area for each reachable set in the first plurality of reachable sets computed for the one or more other road users in the same way.

The system can then prune the occupied area for the ego agent by eliminating from the occupied area any sets of spatial coordinates that overlap with one or more of the occupied areas corresponding to the reachable sets computed for the one or more other road users for the future time *τ*. The first drivable area for the ego agent can include the pruned occupied area for the ego agent. In this way, the first drivable area for the ego agent can include areas on the ground plane that are both possible for the ego agent to reach and free from overlap with the anticipated occupancy of the one or more other road users at the future time *τ*, under the assumption that the ego agent and one or more other road users act in accordance with a normal set of movement parameters.

In some implementations, the system can compute a first drivable area for the ego agent for each of multiple future times *τ*. For example, for each of the multiple the future times *τ*, the system can compute a first drivable area by pruning the occupied area computed for the ego agent for the future time *τ* using the occupied areas computed for the one or more other road users for the future time *τ*, as described above.

The system computes a second drivable area for the ego agent based on the second plurality of reachable sets (710). The system can compute the second drivable area for the ego agent in a similar manner to computing the first drivable area described above, except that an expanded set of movement parameters is used instead of a normal set of movement parameters. In particular, the system can compute a reachable set for the future time *τ* for the ego agent based on the expanded set of movement parameters. In some implementations, the expanded set of movement parameters is a second expanded set of movement parameters for the ego agent. The system can also impose a replanning delay on the ego agent in computing the reachable set based on the expanded set of movement parameters. As described above in reference to FIG. 1, the replanning delay imposes a condition that the ego agent is unable to take action during a period of time specified by the replanning delay. This accounts for the assumption that, under an expanded set of movement parameters, the one or more other road users act in unexpected ways that the ego agent has not incorporated into a current action plan. Therefore, the ego agent can require time to incorporate these unexpected actions into a new action plan before taking any action.

The system can use the reachable set for the future time *τ* for the ego agent based on the expanded set of movement parameters to determine a corresponding occupied area, as described above. The system can prune the occupied area based on occupied areas corresponding to the second plurality of reachable sets computed for the one or more other road users for the future time *τ*, as described above. The second drivable area for the ego agent can include the pruned occupied area. In this way, the second drivable area for the ego agent can include areas on the ground plane that are both possible for the ego agent to reach and free from overlap with the anticipated occupancy of the one or more other road users at the future time *τ*, under the assumption that the ego agent and one or more other road users act in accordance with an expanded set of movement parameters and the imposition of a replanning delay for the ego agent. In some implementations, the system can compute a second drivable area for the ego agent for each of multiple future times *τ* in the same way in which it computes a first drivable area for the ego agent for each of multiple future times *τ*, as described above.

The system computes one or more driving metrics based on the first drivable area and the second drivable area (712). In implementations in which the system computes first and second drivable areas for the ego agent for each of multiple future times *τ*, the one or more driving metrics can include the determination of whether the ego agent is experiencing a normal operation frame violation or an unexpected event frame violation at the current time t. A first or unexpected event frame violation occurs when the first or second drivable area for the ego agent, respectively, does not extend to a time horizon, as described in further detail above in reference to FIG. 1. The existence of a normal operation or an unexpected event frame violation for the ego agent at time t can be a useful indication that the driving behavior of the ego agent is not desirable at time t. In particular, it can indicate that, at time t, the ego agent behaves in a way that does not account for anticipated occupancies of the driving environment in the future by one or more other road users.

In some implementations, the system can compute one or more driving metrics at a plurality of continuous timesteps based on one or more first drivable areas and one or more second drivable areas computed at a given timestep. For example, the system can determine whether the ego agent is experiencing a normal operation frame violation at each of a plurality of continuous timesteps based on a set of first drivable areas computed for each of multiple future times *τ* at the timestep. Similarly, the system can determine whether the ego agent is experiencing an unexpected event frame violation at each of a plurality of continuous timesteps based on a set of second drivable areas computed for each of multiple future times *τ* at the timestep.

In some implementations, the system can respond to a determination that the ego agent is experiencing a frame violation at each of a plurality of continuous timesteps by causing the ego agent to take one or more actions to improve its driving behavior, e.g., such that the first or unexpected event frame violation does not exist at a future timestep. In some examples, the system can cause the ego agent to take actions such as slowing down, applying the brakes, turning, or any combination of these. In implementations in which the techniques are used by a system to assess driving behavior in simulation, the system can respond by marking a driving plan followed by the ego agent as an anomalous plan to be revised.

In some other implementations, the system can compute a measure of safety based on frame violations encountered. For example, the system can add up frame violations of one or each type for a particular trip, planning software, vehicle model, or geographic region. In some implementations, the system can give greater weight to normal operation frame violations than unexpected event frame violations because they increase the situations in which a collision might occur. Thus, the system can for example compute a score for a trip of an ADV by computing a weighted sum of each type of frame violations that occurred. The system can then rank any appropriate entity based on the score based on the frame violations encountered. For example, when seeking to roll out new planning software, in order to make sure that the new planning software is at least as safe as that which already is deployed in the real world, the system can perform a simulation with the current planning software and the new planning software. The system can then compute a score based on the frame violations of each type that were encountered for each version in order to assess the safety of the new version of the planning software. Importantly, the frame violations and associated metrics allow the system to assess the safety of ADVs even when no collisions occur. Thus, the system can detect that the safety of a particular planning software version needs to be enhanced if the software results in too many frame violations of the first or second type.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, off-the-shelf or custom-made parallel processing subsystems, e.g., a GPU or another kind of special-purpose processing subsystem. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD ROM and DVD-ROM disks.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and pointing device, e.g., a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The specification includes the following subject-matter expressed in the form of clauses 1-22.
1. A computer-implemented method for assessing driving behavior of an ego agent comprising:
   receiving data representing a state of a driving environment of the ego agent;
   computing a first plurality of reachable sets for one or more other road users in the driving environment using a normal set of movement parameters;
   computing a second plurality of reachable sets for the one or more other road users in the driving environment using an expanded set of movement parameters;
   computing a first drivable area for the ego agent based on the first plurality of reachable sets;
   computing a second drivable area for the ego agent based on the second plurality of reachable sets; and
   computing one or more driving metrics based on the first drivable area and the second drivable area computed for the ego agent.
2. The method of clause 1, wherein computing the second drivable area comprises imposing a replanning delay for the ego agent.
3. The method of clause 1 or 2, wherein:
   each reachable set in each of the first plurality of reachable sets and the second plurality of reachable sets comprises kinematic states of the one or more other road users.
4. The method of clause 3, wherein each of the first drivable area and the second drivable area comprises a first set of projections onto a ground plane of kinematic states of the ego agent; and
   the method further comprises:
   computing, for each reachable set in each of the first plurality of reachable sets and the second plurality of reachable sets, an occupied area using a second set of projections onto a ground plane of the kinematic states of one or more other road users in the corresponding reachable set;
   eliminating projections from the first set of projections of the first drivable area that overlap with one or more of the occupied areas corresponding to reachable sets in the first plurality of reachable sets; and
   eliminating projections from the first set of projections of the second drivable area that overlap with one or more of the occupied areas corresponding to reachable sets in the second plurality of reachable sets.
5. The method of any of clauses 1-4, wherein each of the normal set of movement parameters and the expanded set of movement parameters comprises one or more available actions, and the one or more available actions in the normal set of movement parameters have reduced kinematic limits relative to the one or more available actions in the expanded set of movement parameters.
6. The method of any of clauses 1-5, further comprising repeatedly computing the first drivable area and the second drivable area for each of a plurality of time steps.
7. The method of clause 6, wherein the one or more driving metrics comprises:
   an indication for each time step of the plurality of time steps of whether a normal operation frame violation exists in the time step, wherein a normal operation frame violation exists in the time step if the first drivable area computed at the time step does not extend to a time horizon; and
   an indication for each time step of the plurality of time steps of whether an unexpected event frame violation exists in the time step, wherein an unexpected event frame violation exists in the time step if the second drivable area computed at the time step does not extend to a time horizon.
8. The method of clause 7, wherein the one or more driving metrics comprises:
   an indication that a normal operation frame violation exists in at least a first threshold number of continuous time steps of the plurality of time steps; and
   an indication that an unexpected event frame violation exists in at least a second threshold number of continuous time steps of the plurality of time steps; and
   the first threshold number is less than or equal to the second threshold number.
9. The method of clause 7 or 8, further comprising determining whether any existing frame violation results from one of:
   measurement noise in kinematic states of the one or more other road users at the time step;
   behavior of the one or more road users; or
   behavior of the ego agent.
10. The method of any of clauses 1-9, wherein the ego agent is a pedestrian and the data representing the state of the driving environment of the ego agent includes one or more of:
   an x position of the center of the pedestrian,
   a y position of the center of the pedestrian,
   a yaw of the pedestrian,
   an angular speed of the pedestrian,
   a forward speed of the pedestrian,
   a forward acceleration of the pedestrian, or
   a forward jerk of the pedestrian.
11. The method of any of clauses 1-9, wherein the ego agent is a vehicle and the data representing the state of the driving environment of the ego agent includes one or more of:
   an x position of the center of the vehicle,
   a y position of the center of the vehicle,
   a yaw of the vehicle,
   a steering angle of the vehicle,
   a steering rate of the vehicle,
   a forward speed of the vehicle,
   a forward acceleration of the vehicle, or
   a forward jerk of the vehicle.
12. The method of any of clauses 1-11, wherein the first plurality of reachable sets comprises kinematic states at boundaries of each of the first plurality of reachable sets, and the second plurality of reachable sets comprises kinematic states at boundaries of each of the second plurality of reachable sets.
13. The method of any of clauses 1-12, wherein:
   computing the first drivable area comprises computing the first drivable area based on a second normal set of movement parameters for the ego agent; and
   computing the second drivable area comprises computing the second drivable area based on a second expanded set of movement parameters for the ego agent.
14. A system comprising one or more computers and one or more storage devices storing instructions that when executed by the one or more computers cause the one or more computers to perform operations for assessing driving behavior of an ego agent, the operations comprising:
   receiving data representing a state of a driving environment of the ego agent;
   computing a first plurality of reachable sets for one or more other road users in the driving environment using a normal set of movement parameters;
   computing a second plurality of reachable sets for the one or more other road users in the driving environment using an expanded set of movement parameters;
   computing a first drivable area for the ego agent based on the first plurality of reachable sets;
   computing a second drivable area for the ego agent based on the second plurality of reachable sets; and
   computing one or more driving metrics based on the first drivable area and the second drivable area computed for the ego agent.
15. The system of clause 14, wherein computing the second drivable area comprises imposing a replanning delay for the ego agent.
16. The system of clause 14 or 15, wherein:
   each reachable set in each of the first plurality of reachable sets and the second plurality of reachable sets comprises kinematic states of the one or more other road users.
17. The system of clause 16, wherein each of the first drivable area and the second drivable area comprises a first set of projections onto a ground plane of kinematic states of the ego agent; and
   the operations further comprise:
   computing, for each reachable set in each of the first plurality of reachable sets and the second plurality of reachable sets, an occupied area using a second set of projections onto a ground plane of the kinematic states of one or more other road users in the corresponding reachable set;
   eliminating projections from the first set of projections of the first drivable area that overlap with one or more of the occupied areas corresponding to reachable sets in the first plurality of reachable sets; and
   eliminating projections from the first set of projections of the second drivable area that overlap with one or more of the occupied areas corresponding to reachable sets in the second plurality of reachable sets.
18. One or more non-transitory computer-readable storage media encoded with computer program instructions that when executed by one or more computers cause the one or more computers to perform operations for assessing driving behavior of an ego agent, the operations comprising:
   receiving data representing a state of a driving environment of the ego agent;
   computing a first plurality of reachable sets for one or more other road users in the driving environment using a normal set of movement parameters;
   computing a second plurality of reachable sets for the one or more other road users in the driving environment using an expanded set of movement parameters;
   computing a first drivable area for the ego agent based on the first plurality of reachable sets;
   computing a second drivable area for the ego agent based on the second plurality of reachable sets; and
   computing one or more driving metrics based on the first drivable area and the second drivable area computed for the ego agent.
19. The one or more non-transitory computer-readable storage media of clause 18, wherein computing the second drivable area comprises imposing a replanning delay for the ego agent.
20. The one or more non-transitory computer-readable storage media of clause 18 or 19, wherein:
   each reachable set in each of the first plurality of reachable sets and the second plurality of reachable sets comprises kinematic states of the one or more other road users.
21. A system comprising one or more computers and one or more storage devices storing instructions that when executed by the one or more computers cause the one or more computers to perform operations for assessing driving behavior of an ego agent, the operations comprising the method of any of clauses 1-13.
22. One or more non-transitory computer-readable storage media encoded with computer program instructions that when executed by one or more computers cause the one or more computers to perform operations for assessing driving behavior of an ego agent, the operations comprising the method of any of clauses 1-13.

## Claims

1. A computer-implemented method for assessing driving behavior of an ego agent comprising:
receiving data representing a state of a driving environment of the ego agent;
computing a first plurality of reachable sets for one or more other road users in the driving environment using a normal set of movement parameters;
computing a second plurality of reachable sets for the one or more other road users in the driving environment using an expanded set of movement parameters;
computing a first drivable area for the ego agent based on the first plurality of reachable sets;
computing a second drivable area for the ego agent based on the second plurality of reachable sets; and
computing one or more driving metrics based on the first drivable area and the second drivable area computed for the ego agent.

2. The method of claim 1, wherein computing the second drivable area comprises imposing a replanning delay for the ego agent.

3. The method of claim 1 or 2, wherein:
each reachable set in each of the first plurality of reachable sets and the second plurality of reachable sets comprises kinematic states of the one or more other road users.

4. The method of claim 3, wherein each of the first drivable area and the second drivable area comprises a first set of projections onto a ground plane of kinematic states of the ego agent; and
the method further comprises:
computing, for each reachable set in each of the first plurality of reachable sets and the second plurality of reachable sets, an occupied area using a second set of projections onto a ground plane of the kinematic states of one or more other road users in the corresponding reachable set;
eliminating projections from the first set of projections of the first drivable area that overlap with one or more of the occupied areas corresponding to reachable sets in the first plurality of reachable sets; and
eliminating projections from the first set of projections of the second drivable area that overlap with one or more of the occupied areas corresponding to reachable sets in the second plurality of reachable sets.

5. The method of any preceding claim, wherein each of the normal set of movement parameters and the expanded set of movement parameters comprises one or more available actions, and the one or more available actions in the normal set of movement parameters have reduced kinematic limits relative to the one or more available actions in the expanded set of movement parameters.

6. The method of any preceding claim, further comprising repeatedly computing the first drivable area and the second drivable area for each of a plurality of time steps.

7. The method of claim 6, wherein the one or more driving metrics comprises:
an indication for each time step of the plurality of time steps of whether a normal operation frame violation exists in the time step, wherein a normal operation frame violation exists in the time step if the first drivable area computed at the time step does not extend to a time horizon; and
an indication for each time step of the plurality of time steps of whether an unexpected event frame violation exists in the time step, wherein an unexpected event frame violation exists in the time step if the second drivable area computed at the time step does not extend to a time horizon.

8. The method of claim 7, wherein the one or more driving metrics comprises:
an indication that a normal operation frame violation exists in at least a first threshold number of continuous time steps of the plurality of time steps; and
an indication that an unexpected event frame violation exists in at least a second threshold number of continuous time steps of the plurality of time steps; and
the first threshold number is less than or equal to the second threshold number.

9. The method of claim 7 or 8, further comprising determining whether any existing frame violation results from one of:
measurement noise in kinematic states of the one or more other road users at the time step;
behavior of the one or more road users; or
behavior of the ego agent.

10. The method of any preceding claim, wherein the ego agent is a pedestrian and the data representing the state of the driving environment of the ego agent includes one or more of:
an x position of the center of the pedestrian,
a y position of the center of the pedestrian,
a yaw of the pedestrian,
an angular speed of the pedestrian,
a forward speed of the pedestrian,
a forward acceleration of the pedestrian, or
a forward jerk of the pedestrian.

11. The method of any of claims 1-9, wherein the ego agent is a vehicle and the data representing the state of the driving environment of the ego agent includes one or more of:
an x position of the center of the vehicle,
a y position of the center of the vehicle,
a yaw of the vehicle,
a steering angle of the vehicle,
a steering rate of the vehicle,
a forward speed of the vehicle,
a forward acceleration of the vehicle, or
a forward jerk of the vehicle.

12. The method of any preceding claim, wherein the first plurality of reachable sets comprises kinematic states at boundaries of each of the first plurality of reachable sets, and the second plurality of reachable sets comprises kinematic states at boundaries of each of the second plurality of reachable sets.

13. The method of any preceding claim, wherein:
computing the first drivable area comprises computing the first drivable area based on a second normal set of movement parameters for the ego agent; and
computing the second drivable area comprises computing the second drivable area based on a second expanded set of movement parameters for the ego agent.

14. A system comprising one or more computers and one or more storage devices storing instructions that when executed by the one or more computers cause the one or more computers to perform operations for assessing driving behavior of an ego agent, the operations comprising the method of any preceding claim.

15. One or more non-transitory computer-readable storage media encoded with computer program instructions that when executed by one or more computers cause the one or more computers to perform operations for assessing driving behavior of an ego agent, the operations comprising the method of any of claims 1-13.
